# EUROPÄISCHE PATENTSCHRIFT

(11) **EP 2 574 500 B1**
(45) Veröffentlichungstag und Bekanntmachung des Hinweises auf die Patenterteilung: **02.03.2016**
(21) Anmeldenummer: 12006454.8
(22) Anmeldetag: 14.09.2012
(51) Int. Cl.: B60P 3/39, B60P 3/36

(54) **Mobile Campingeinheit**
Mobile camping unit
Unité de camping mobile

(30) Priorität: 28.09.2011 DE 202011106152 U
(43) Veröffentlichungstag der Anmeldung: 03.04.2013
(73) Patentinhaber: Vielmetter, Ulrich, 45549 Sprockhövel (DE)
(72) Erfinder: Vielmetter, Ulrich, 45549 Sprockhövel (DE)
(74) Vertreter: Spahn, Tobias

(56) Entgegenhaltungen:
- EP-A1- 0 365 438
- DE-A1- 4 100 936
- DE-A1- 19 756 134
- DE-U1- 20 200 800
- FR-A1- 2 517 188
- FR-A1- 2 765 164
- US-A- 4 197 600
- US-A1- 2003 197 043

## Beschreibung

### 1. Technisches Gebiet:

Die vorliegende Erfindung betrifft eine mobile Campingeinheit zur Verwendung in Kabinen von geschlossenen Fahrzeugen, wie z. B. in DE 197 56 134 A1 offenbart.

### 2. Stand der Technik:

Zur Nutzung von Fahrzeugen zu Campingzwecken sind verschiedene Küchenblock- sowie Bett- und Schranksysteme verfügbar. Ein Nachteil dieser Lösungen ist, dass sie in das Fahrzeug fest eingebaut oder zumindest mit Schrauben oder über fahrzeugspezifische Schienensysteme fixiert werden müssen, um genutzt werden zu können. Dies schränkt die Nutzungsmöglichkeiten des Fahrzeugs zu anderen Zwecken entweder dauerhaft ein oder erfordert zumindest einen hohen Umrüstungsaufwand für unterschiedlichen Nutzungszwecke.

Aus der DE 8611375U1 ist ein Küchenblock, insbesondere für den Einbau in Kleinbussen oder Wohnmobilen bekannt, der auf am Fahrzeugboden befestigten Schienen gelagert ist. Diese Vorrichtung besitzt den Nachteil, dass der Einbau mit einem hohen konstruktiven Aufwand verbunden und die Nutzungsmöglichkeiten des Fahrzeugs dauerhaft eingeschränkt ist.

Die DE 202004011970 U1 beschreibt ein Camping-Einbaumöbel für ein Kraftfahrzeug, das aus mehreren Modulen zusammengesetzt ist, die jeweils für sich genommen und unabhängig voneinander im Kraftfahrzeug lösbar befestigbar sind und jeweils wenigstens eine Küchenausstattung und/oder wenigstens eine Campingausrüstung enthalten. Zur Nutzung als Liegefläche sieht die DE 202004011970 U1 vor, dass die Höhe des Camping-Einbaumöbels der Höhe einer Liegefläche bei umgeklappten Sitzen des Kraftfahrzeugs entspricht. Die Lösung besitzt den Nachteil, dass die Schaffung einer Liegefläche einen entsprechend eingerichteten Kraftfahrzeuginnenraum erfordert und hierauf abgestimmt sein muss. Ferner bilden bei dieser Lösung Campingausrüstung und Liegefläche keine funktionale Einheit wodurch der Auf- und Abbau sowie der Transport erschwert sind.

Aus der DE 202007014666 U1 ist ein Untergestell für ein Campingbett zum temporären Einbau in ein Kraftfahrzeug bekannt, welches ein erstes und ein zweites Standelement mit ein oder mehreren dazwischen liegenden Längsstreben aufweist, wobei die Auflagefläche von dem zweiten Standelement und der oder den Längstreben gebildet ist. Die Vorrichtung besitzt den Nachteil, dass die Längsstreben statisch ausgebildet sind und damit einen erheblichen Raumbedarf beanspruchen. Ferner sieht die DE 202007014666 U1 vor, dass das Untergestell zum Transport in mehrere Einzelteile zerlegt wird, was das Auf- und Abschlagen relativ aufwendig macht.

Aus der DE 202009007234 U1 ist ein Untergestell für ein Campingbett für ein Fahrzeug mit Sitzbank mit umklappbaren Rückenlehnenteil bekannt, welches eine aus wenigstens einem Segment zusammengesetzte Liegefläche aufweist, wobei ein erstes Segment der Liegefläche Befestigungsmittel zum Befestigen dieses Segments an der umklappbaren Rückenlehne der Sitzbank aufweist. Die Vorrichtung besitzt den Nachteil, dass außer der Liegefläche kein weiterer Nutzraum für Campingbedarf vorgesehen ist. Ferner besitzt sie den Nachteil, dass zur Verwendung ein entsprechend eingerichteter Fahrzeuginnenraum erforderlich ist. Zwar kann die Vorrichtung nach der DE 202009007234 U1 auch unabhängig von einer Rückenlehne aufgebaut werden, jedoch ist ihr konstruktiver Aufbau aufgrund der alternativen Verwendungsmöglichkeiten relativ komplex.

### 3. Darstellung der Erfindung:

Der Erfindung liegt die Aufgabe zugrunde, eine Campingeinheit mit Nutzraum und Liegefläche zu schaffen, welche die dargestellten Nachteile vermeidet. Insbesondere soll es ermöglicht werden, eine möglichst universell, d.h. für unterschiedliche Fahrzeugtypen einsetzbare Campingeinheit zu schaffen, deren Nutzung keinen aufwändigen Auf- oder Einbau benötigt.

Erfindungsgemäß wird die Aufgabe durch eine Campingeinheit nach Anspruch 1 gelöst, vorteilhafte Ausführungen sind in den Unteransprüchen beschrieben.

Die Grundlage der Erfindung bildet eine mobile Campingeinheit mit Nutzraum und Liegefläche und einer im Wesentlichen rechteckigen Grundfläche, wobei sich der Nutzraum im unteren Bereich und die Liegefläche im oberen Bereich der Campingeinheit befinden, die Liegefläche segmentiert ist und von einem Transportzustand, in welchem sämtliche Segmente der Liegefläche übereinander, im Wesentlichen kongruent zur Grundfläche der Campingeinheit angeordnet sind, in einen Benutzungszustand, in welchem die Segmente der Liegefläche innerhalb einer Ebene auf der Höhe des oberen Bereichs der Campingeinheit angeordnet sind, überführt werden kann und die Liegefläche im Benutzungszustand an einem Ende im Wesentlichen kongruent zur Grundfläche der Campingeinheit angeordnet und am gegenüberliegenden Ende durch mindestens ein zusätzliches Mittel abgestützt oder abgehängt ist. Die Höhe des Montagepunktes der Liegefläche an oder innerhalb der Campingeinheit wird hierbei so gewählt, dass sie so hoch angeordnet ist, dass sie eine etwaig in der Kabine des Fahrzeugs vorhandene Rückbank, wenn diese umgeklappt ist, im Benutzungszustand überragt. Hierzu bildet die Liegefläche vorzugsweise das obere Ende der Campingeinheit. Der unter der Liegefläche befindliche Nutzraum dient der Aufnahme der weiteren funktionalen Camping-Utensilien und -einrichtungen. Der Nutzraum kann unabhängig von der Liegefläche genutzt werden, d.h., dass die Liegefläche hierbei auch im Transportzustand verweilen kann.

Die erfindungsgemäße Campingeinheit besitzt den Vorteil, dass sie universell für unterschiedlichste Fahrzeugtypen einsetzbar ist und keine besondere Ausgestaltung des Fahrzeuginnenraums benötigt. Im Benutzungszustand ist die Liegefläche an ihrem einen Ende auf der Campingeinheit positioniert und an ihrem gegenüberliegenden Ende durch mindestens ein zusätzliches Mittel abgestützt oder abgehängt. Als derartige Mittel sind beispielsweise Halteschlaufen oder Klappfüße geeignet. Sie benötigt daher keine zusätzlichen Auflagevorrichtungen innerhalb der Fahrzeugkabine, etwa eine umgeklappte Rückbank, sondern ist hiervon unabhängig nutzbar. Durch die kompakte Ausgestaltung, bei der sich Nutzraum und Liegefläche sowohl im Transport-, als auch im Benutzungszustand dieselbe Grundfläche teilen, wird der Raum optimal ausgenutzt. Dadurch, dass die Liegefläche mit der Campingeinheit eine funktionale Einheit bildet, kann die Campingeinheit einfach transportiert, aufgebaut und wieder abgeschlagen werden.

Eine einfach herzustellende und benutzbare Mechanik für Überführung der Segmente der Liegefläche vom Transport- in den Benutzungszustand wird erreicht, indem ein erstes Segment der Liegefläche als Oberseite der Campingeinheit fest oder lösbar montiert ist und die jeweils in einer Richtung anschließenden Segmente jeweils mit mindestens einem Scharnier oder Drehgelenk derart angelenkt sind, dass die Segmente der Liegefläche im Transportzustand flach übereinander, im Wesentlichen kongruent zur Grundfläche der Campingeinheit angeordnet sind und im Benutzungszustand als ebene Liegefläche angeordnet sind. Hierzu besitzen die zwischen den Segmenten befindlichen Scharniere oder Drehgelenke einen abwechselnd umgekehrt ausgerichteten Freiheitsgrad von jeweils 180°.

Eine besonders universelle Einsetzbarkeit der Campingeinheit wird gewährleistet, indem sie im Wesentlichen als Quader ausgebildet ist und die Kantenlängen ihrer Grundfläche höchstens 1200 × 800 mm betragen. Dies entspricht den durch die DIN EN 13698 Teil 1 genormten Größenvorgaben für die Grundfläche mehrwegfähiger Transportpaletten, an denen sich viele Fahrzeughersteller bei der Gestaltung von Fahrzeugkabinen insbesondere bei Nutzfahrzeugen orientieren. Durch die Einhaltung dieser Größenvorgaben wird eine weitestgehende Einsetzbarkeit sichergestellt. Dies ermöglicht bei etlichen Fahrzeugtypen ferner eine Positionierung der Campingeinheit mit ihrer Längsseite quer zur Fahrzeugrichtung, wodurch eine Verwendung der Liegefläche im Benutzungszustand mit einer für durchschnittliche Körperlängen von etwa bis zu 2 Metern auch bei relativ kurzen Fahrzeugtypen gewährleistet ist.

In der vorstehenden Ausgestaltung ist die Liegefläche im Benutzungszustand vorzugsweise in Längsrichtung quer zur Längsseite der Campingeinheit angeordnet und in drei Segmente unterteilt, was eine effektive räumliche Ausgestaltung darstellt.

Dadurch, dass die Segmente der Liegefläche fest oder lösbar bepolstert sind, wird eine verbesserte Einsatzfähigkeit gewährleistet. Es muss keine Matratze oder dergleichen gesondert erworben und montiert werden. Zugleich wird Anzahl der zum Einsatz erforderlichen Einzelteile reduziert, was die Handhabbarkeit der Vorrichtung weiter verbessert.

Der Nutzraum der mobilen Campingeinheit ist vorzugsweise mit mindestens einer Kochstelle, mindestens einem Wassertank mit Entnahmestelle und mindestens einem unter der Entnahmestelle eines Wassertanks positionierten Becken ausgebildet. Dies stellt eine praktische Kombination der üblicherweise zum Camping benötigten funktionalen Utensilien und Einrichtungen dar.

Eine besonders praktische Funktionseinheit wird erreicht, indem auch der Nutzraum der Campingeinheit von einem Transpörtzustand, in welchem der Nutzraum der Campingeinheit im Wesentlichen als geschlossener Quader ausgebildet ist, in einen Benutzungszustand überführt werden kann, in welchem die Kochstelle außerhalb des Nutzraums angeordnet ist. Diese Ausgestaltung gewährleistet zum Einen eine gute Transportierbarkeit als geschlossener Quader. Gleichzeitig befindet sich die Kochstelle im Benutzungszustand außerhalb des Nutzraums der Campingeinheit, womit bei der Benutzung zum einen mehr Platz zur Verfügung steht und zum anderen ein problemloses Entweichen der von der Kochstelle emittierten Hitze und der Abluft gewährleistet ist.

In der vorstehend beschriebenen Ausgestaltung wird eine einfach herzustellende und benutzbare Mechanik für Überführung der Kochstelle vom Transport- in den Benutzungszustand erreicht, indem die Kochstelle zur Überführung von dem Transport- in den Nutzungszustand als Schublade ausgebildet ist.

Die erfindungsgemäße Vorrichtung wird nachstehend unter Bezugnahme auf die beigefügten Zeichnungen anhand eines Ausführungsbeispiels näher beschrieben:

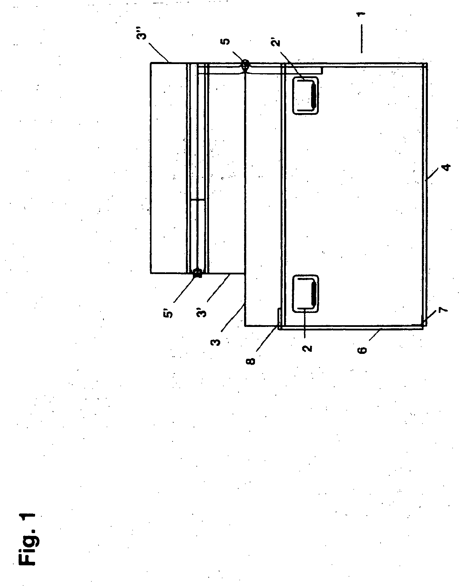

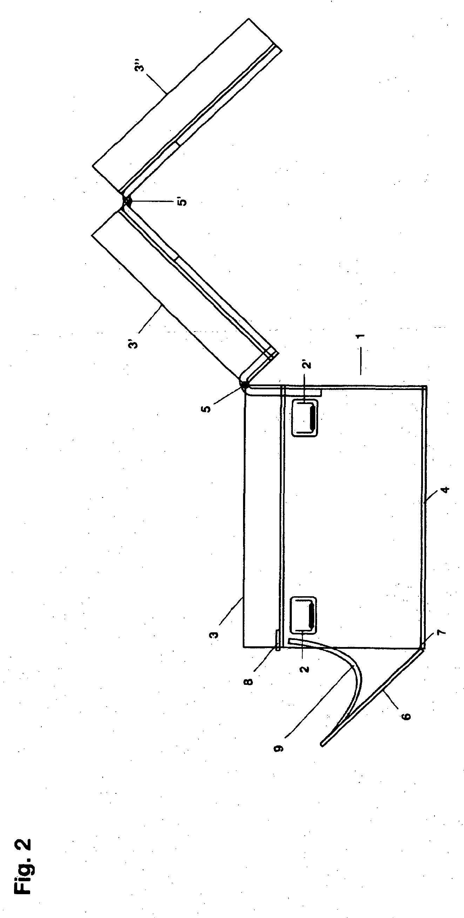

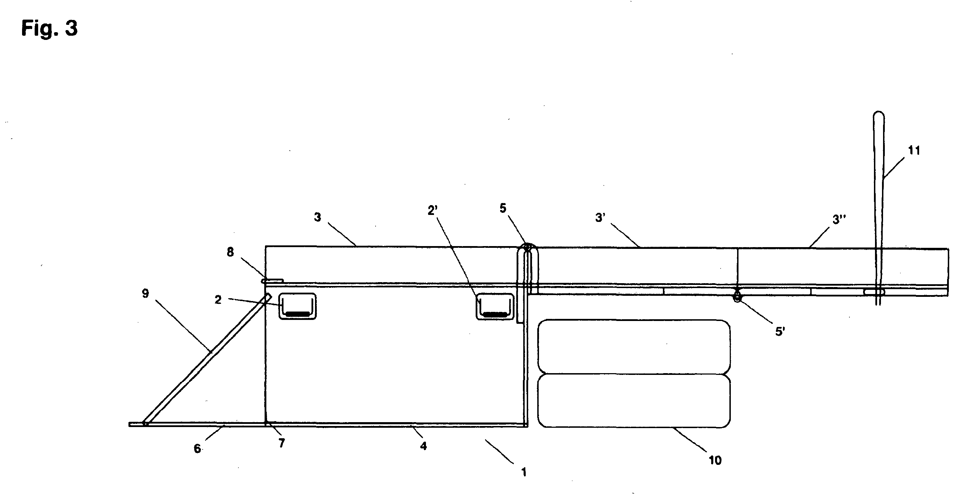

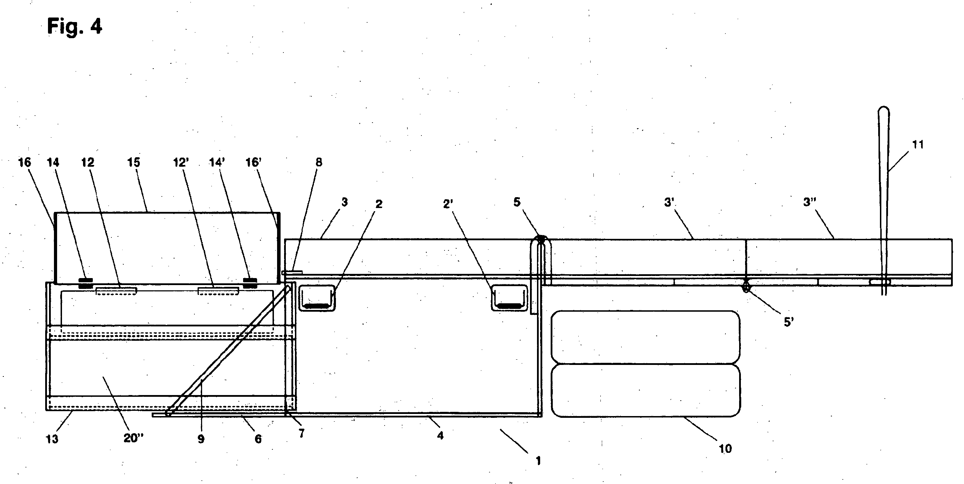

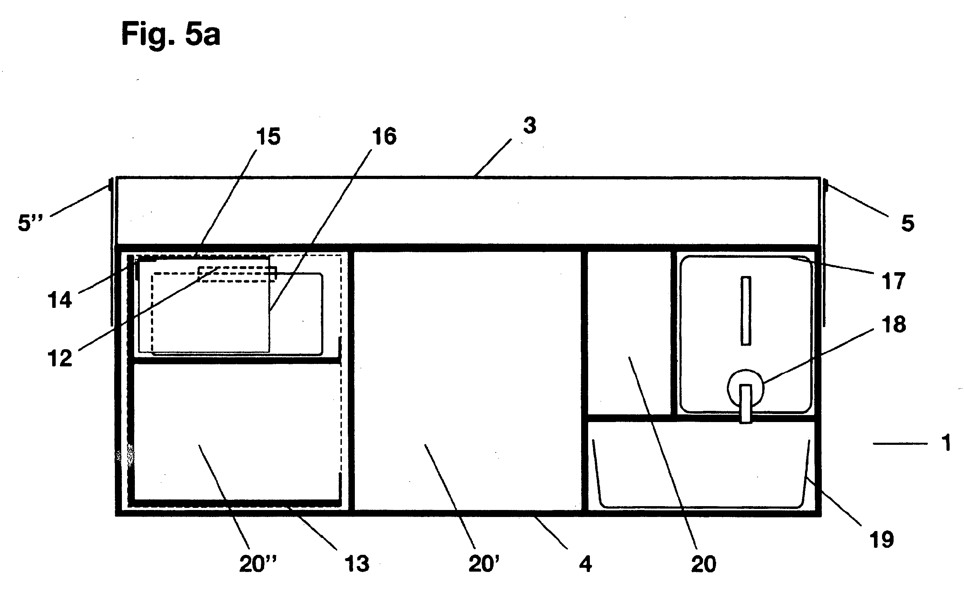

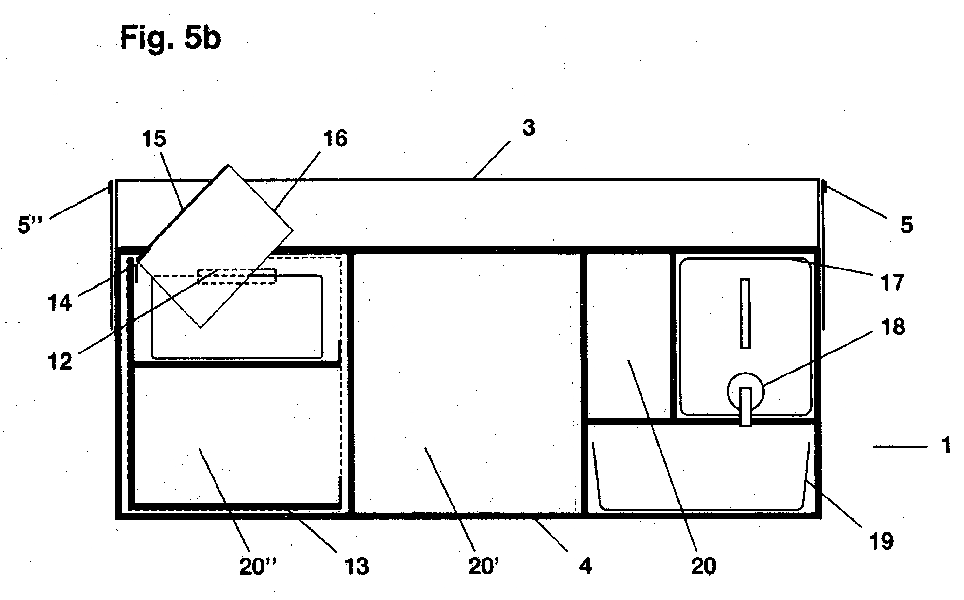

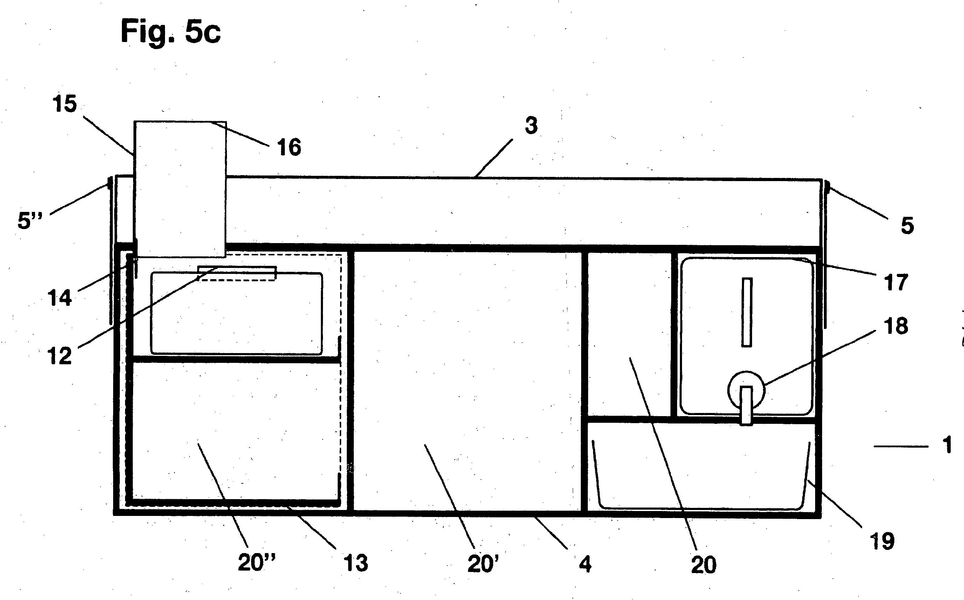

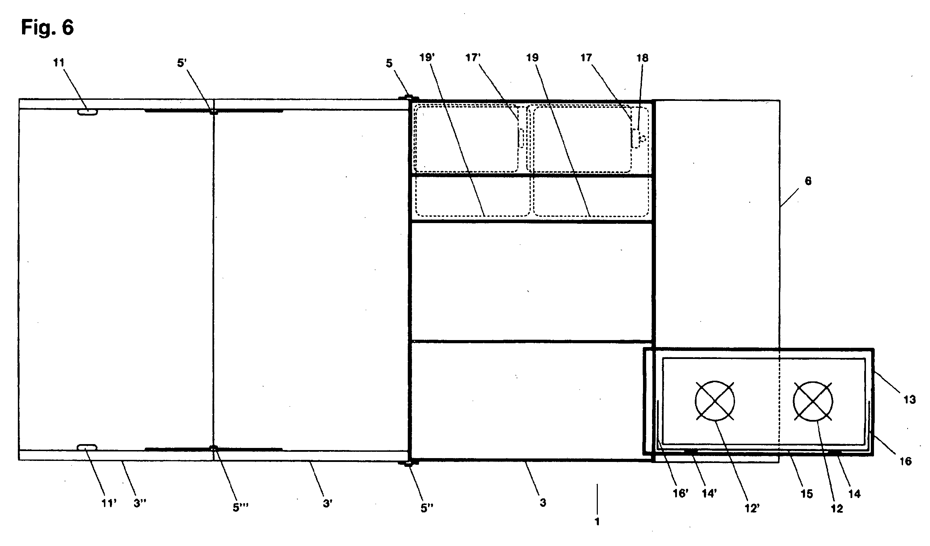

Die Figuren 1 bis 7 zeigen eine beispielhafte Campingeinheit 1 in verschiedenen Ansichten. Figur 1 zeigt die Campingeinheit 1 im Transportzustand als Seitenansicht. Die Campingeinheit 1 ist im Wesentlichen als geschlossener Quader ausgebildet und besitzt zu ihrem Transport beidseitig jeweils zwei Griffe, von denen die Griffe 2 und 2' in den Seitenansichten gemäß der Figuren 1 bis 3 sichtbar sind. Die Liegefläche befindet sich im oberen Bereich der Campingeinheit 1 und wird aus den gepolsterten Segmenten 3, 3' und 3" gebildet, welche im Transportzustand übereinander im Wesentlichen kongruent zur Grundfläche 4 der Campingeinheit 1 angeordnet sind. Das Segment 3 der Liegefläche bildet hierbei die Oberseite der Campingeinheit 1 und ist auf dieser lösbar montiert. Die Segmente 3' und 3" sind jeweils beidseitig mit Scharnieren am jeweils benachbarten Segment angelenkt, von denen die Scharniere 5 und 5' in der Seitenansicht gemäß der Figuren 1 bis 3 sichtbar sind, so dass die Segmente der Liegefläche im Transportzustand flach übereinander im Wesentlichen kongruent zur Grundfläche der Campingeinheit angeordnet sind und im Benutzungszustand als ebene Liegefläche angeordnet sind. Hierzu besitzen die zwischen den Segmenten 3, 3' und 3" befindlichen Scharniere einen abwechselnd umgekehrt ausgerichteten Freiheitsgrad von jeweils 180°. Der Zugang zum nutzbaren Innenraum der Campingeinheit 1 ist im Transportzustand durch die klappbare Verschlussplatte 6 versperrt, welche mit Scharnieren befestigt ist, von welchen lediglich das Scharnier 7 in der Seitenansicht gemäß der Figuren 1 bis 3 sichtbar ist, und welche an ihrem oberen Ende mit Kofferverschlüssen verriegelt ist, von welchen lediglich der Verschluss 8 in der Seitenansicht gemäß der Figuren 1 bis 3 sichtbar ist. Die Figuren 2 und 3 zeigen die Campingeinheit 1 während der Überführung vom Transport- in den Benutzungszustand, wobei sich die Liegefläche in die Figur 3 vollständig im Benutzungszustand befindet und die aufgeklappte Verschlussplatte 6 durch das Halteband 9 gehalten wird. Figur 3 veranschaulicht in schematischer Darstellung die Positionierung der Campingeinheit 1 mit aufgeklappter Liegefläche im Benutzungszustand innerhalb einer Fahrzeugkabine bei umgeklappter Rückbank 10, wobei das der Grundfläche 4 gegenüberliegenden Ende der Liegefläche am Segment 3" beidseitig mit Halteschlaufen 11 und 11' abgehängt ist. Die Halteschlaufen dienen zur Befestigung an festen Ankerstellen im Inneren der Fahrzeugkabine, welche sich oberhalb der Liegefläche befinden, wie beispielsweise den Sicherheitsgurt-Umlenkbügeln, und halten die ausgeklappte Liegefläche so belastbar in der Waagerechten. Figur 4 zeigt die Campingeinheit 1 mit den ebenfalls im Benutzungszustand befindlichen Kochstellen 12 und 12', welche innerhalb des ausgezogenen Schubladenelements 13 positioniert sind. Die Kochstellen 12 und 12' sind im Benutzungszustand durch einen mit Scharnieren 14 und 14' befestigten und aufklappbaren Windschutz geschützt, welcher durch die Rückwand 15 und zwei Seitenwände 16 und 16' gebildet ist. Da die Seitenwand 16' des aufgeklappten Windschutzes an das Segment 3 der Liegefläche angrenzt, dient dieser gleichzeitig als formschlüssige Arretierung für das ausgezogene Schubladenelement 13. Die Figuren 5a bis 5c zeigen den unter der Liegefläche befindlichen Nutzraum der Campingeinheit 1 als schematische Frontansicht in Schnittdarstellung während des Ausklappens des Windschutzes. Der Nutzraum ist mit zwei Wassertanks 17 und 17' ausgestaltet, von denen der vordere Wassertank 17 mit einer als Auslaufhahn ausgestalteten Entnahmestelle 18 ausgebildet ist. Der zweite Wassertank 17' dient als Reservewassertank. Unter den Wassertanks 17 und 17' sind zwei Becken 19 und 19' untergebracht, wobei das vordere Becken 19 ein Stück herausgezogen werden kann, um im Betrieb als Auffangbecken für die Entnahmestelle 18 zu dienen. Die Fächer 20, 20' und 20" dienen als Stau- und Ablageraum. Figur 6 zeigt die Campingeinheit 1 mit Liegefläche und Kochstelle in Benutzungszustand in schematischer Aufsicht, wobei die Funktionselemente des Nutzraums unterhalb des Segments 3 der Liegefläche der besseren Übersicht halber als Teil-Schnittdarstellung mit eingezeichnet sind.

### 4. Kurze Beschreibung der Zeichnungen:

- Fig.1 1: ist eine Seitenansicht einer beispielhaften Campingeinheit im Transportzustand.
- Fig. 2: ist eine Seitenansicht der Campingeinheit während der Überführung vom Transport- in den Benutzungszustand.
- Fig. 3: ist eine Seitenansicht der Campingeinheit während der Überführung vom Transport- in den Benutzungszustand mit Liegefläche im Benutzungszustand.
- Fig. 4: ist eine Seitenansicht der Campingeinheit mit Kochstelle und Liegefläche im Benutzungszustand.
- Fig 5a.: zeigt eine schematische Frontansicht der Campingeinheit mit Liegefläche und Kochstelle in Benutzungszustand als Schnittdarstellung.
- Fig. 5b: zeigt die Ansicht gemäß Fig. 4a mit halb aufgeklapptem Windschutz.
- Fig. 5c: zeigt die Ansicht gemäß Fig. 4b mit vollständig aufgeklapptem Windschutz.
- Fig. 6: ist eine schematische Aufsicht der-Campingeinheit mit Liegefläche und Kochstelle in Benutzungszustand als Schnittdarstellung.

### 5. Gewerbliche Anwendbarkeit:

Die erfindungsgemäße Campingeinheit eignet sich zur Ausrüstung vow Fahrzeugen mit Kabine, insbesondere von Kastenwagen, Kombinationskraftwagen und Kleintransportern mit den funktionalen Kernelementen eines Wohnmobils.

## Patentansprüche

1. Mobile Campingeinheit (1) mit einer im Wesentlichen rechteckigen Grundfläche (4), einer Liegefläche, welche die Oberseite der Campingeinheit (1) bildet und einem darunter angeordnetem Nutzraum, wobei die Liegefläche segmentiert ist und von einem Transportzustand, in welchem sämtliche Segmente (3, 3', 3") der Liegefläche flach übereinander, im Wesentlichen kongruent zur Grundfläche (4) der Campingeinheit (1) angeordnet sind, in einen Benutzungszustand, in welchem die Segmente (3, 3', 3") der Liegefläche innerhalb einer Ebene auf der Höhe der Oberseite der Campingeinheit (1) angeordnet sind, überführt werden kann, und die Liegefläche im Benutzungszustand an einem Ende im Wesentlichen kongruent zur Grundfläche (4) der Campingeinheit angeordnet und am gegenüberliegenden Ende durch mindestens ein zusätzliches Mittel (11, 11') abgestützt oder abgehängt ist und ein erstes Segment (3) der Liegefläche als Oberseite der Campingeinheit fest oder lösbar montiert ist, **dadurch gekennzeichnet, dass** die jeweils in einer Richtung anschließenden Segmente (3', 3") jeweils mit mindestens einem Scharnier (5, 5', 5", 5"') oder Drehgelenk angelenkt sind, wobei die zwischen den Segmenten (3,3', 3") befindlichen Scharniere (5,5', 5", 5"') oder Drehgelenke einen abwechselnd umgekehrt ausgerichteten Freiheitsgrad von jeweils 180° aufweisen.

2. Mobile Campingeinheit (1) nach Anspruch 1, **dadurch gekennzeichnet, dass** sie im Wesentlichen als Quader ausgebildet ist und die Kantenlängen ihrer Grundfläche (4) höchstens 1200 × 800 mm betragen.

3. Mobile Campingeinheit (1) nach Anspruch 2, **dadurch gekennzeichnet, dass** die Liegefläche im Benutzungszustand in Längsrichtung quer zur Längsseite der Campingeinheit (1) angeordnet und in drei Segmente unterteilt ist.

4. Mobile Campingeinheit (1) nach einem der Ansprüche 1 bis 3, **dadurch gekennzeichnet, dass** die Segmente (3, 3', 3") der Liegefläche fest oder lösbar bepolstert sind.

5. Mobile Campingeinheit (1) nach einem der Ansprüche 1 bis 4, **dadurch gekennzeichnet, dass** der Nutzraum mit mindestens einer Kochstelle (12, 12'), mindestens einem Wassertank (17, 17') mit Entnahmestelle (18) und mindestens einem unter der Entnahmestelle (18) eines Wassertanks (17, 17') positionierten Becken (19, 19') ausgebildet ist.

6. Mobile Campingeinheit nach Anspruch 5, **dadurch gekennzeichnet, dass** der Nutzraum von einem Transportzustand, in welchem der Nutzraum der Campingeinheit (1) im Wesentlichen als geschlossener Quader ausgebildet ist, in einen Benutzungszustand überführt werden kann, in welchem die Kochstelle (12, 12') außerhalb des Nutzraums angeordnet ist.

7. Mobile Campingeinheit nach Anspruch 6, **dadurch gekennzeichnet, dass** die Kochstelle (12, 12') zur Überführung von dem Transport- in den Nutzungszustand als Schublade (13) ausgebildet ist.

## Claims

1. Mobile camping unit (1) with a substantially rectangular base surface (4), a couch surface which forms the upper face of the camping unit (1) and a usable space disposed below it, wherein the couch surface is segmented and can be converted from a transport state, in which all segments (3, 3', 3") of the couch surface are disposed flat above one another, substantially congruent with the base surface (4) of the camping unit (1), into a usage state, in which the segments (3, 3', 3") of the couch surface are disposed within a plane at the level of the upper face of the camping unit (1), and the couch surface in the usage state is disposed at one end substantially congruent to the base surface (4) of the camping unit and is supported or suspended at the opposite end by at least one additional means (11, 11') and a first segment (3) of the couch surface is fixedly or detachably mounted as the upper face of the camping unit, **characterised in that** the segments (3', 3") respectively adjoining in one direction are in each case articulated with at least one hinge (5, 5', 5", 5"') or pivot joint, wherein the hinges (5, 5', 5", 5"') or pivot joints located between the segments (3, 3', 3") have a degree of freedom of 180° in each case with alternating reverse orientation.

2. Mobile camping unit (1) according to claim 1, **characterised in that** it is designed substantially as a cuboid and the edge lengths of its base surface (4) are at most 1200 x 800 mm.

3. Mobile camping unit (1) according to claim 2, **characterised in that** the couch surface in the usage state is disposed in the longitudinal direction transversely to the long side of the camping unit (1) and is divided into three segments.

4. Mobile camping unit (1) according to one of claims 1 to 3, **characterised in that** the segments (3, 3', 3") of the couch surface are fixedly or detachably upholstered.

5. Mobile camping unit (1) according to one of claims 1 to 4, **characterised in that** the usable space is formed with at least one hotplate (12, 12'), at least one water tank (17, 17') with a tap (18), and at least one basin (19, 19') positioned below the tap (18) of a water tank (17, 17').

6. Mobile camping unit according to claim 5, **characterised in that** the usable space can be converted from a transport state, in which the usable space of the camping unit (1) is formed substantially as a closed cuboid, into a usage state, in which the hotplate (12, 12') is disposed outside the usable space.

7. Mobile camping unit according to claim 6, **characterised in that** the hotplate (12, 12') is designed as a drawer (13) for conversion from the transport state into the usage state.

## Revendications

1. Unité de camping mobile (1) avec une surface de base (4) essentiellement rectangulaire, une surface de couchage formant la face supérieure de l'unité de camping (1) et un espace utile agencé sous celle-ci, la surface de couchage étant segmentée et pouvant être transférée d'un état de transport, dans lequel tous les segments (3, 3', 3") de la surface de couchage sont superposés à plat les uns sur les autres, de façon à coïncider essentiellement avec la surface de base (4) de l'unité de camping (1), vers un état d'utilisation, dans lequel les segments (3, 3', 3") de la surface de couchage sont agencés dans un plan à la hauteur de la face supérieure de l'unité de camping (1), et la surface de couchage étant, dans l'état d'utilisation, agencée de manière à coïncider essentiellement avec la surface de base (4) de l'unité de camping à une extrémité, et à s'appuyer ou à s'accrocher par le biais d'au moins un moyen supplémentaire (11, 11') à l'extrémité opposée, et un premier segment (3) de la surface de couchage étant montée fixement ou de façon détachable, en tant que face supérieure de l'unité de camping, **caractérisée en ce que** les segments (3', 3") raccordés respectivement dans une direction sont respectivement articulés par au moins une charnière (5, 5', 5", 5"') ou un pivot, les charnières (5, 5', 5", 5"') ou pivots situé(e)s entre les segments (3, 3', 3") présentant un degré de liberté respectif de 180° orienté de façon alternativement inversée.

2. Unité de camping mobile (1) selon la revendication 1, **caractérisée en ce qu'**elle présente une forme essentiellement parallélépipédique, et les longueurs des côtés de sa surface de base (4) mesurent au maximum 1200 x 800 mm.

3. Unité de camping mobile (1) selon la revendication 2, **caractérisée en ce que** dans l'état d'utilisation, la surface de couchage est agencée transversalement au côté longitudinal de l'unité de camping (1) dans le sens longitudinal, et divisée en trois segments.

4. Unité de camping mobile (1) selon l'une des revendications 1 à 3, **caractérisée en ce que** les segments (3, 3', 3") de la surface de couchage sont rembourrés fixement ou de façon détachable.

5. Unité de camping mobile (1) selon l'une des revendications 1 à 4, **caractérisée en ce que** l'espace utile est formé avec au moins une zone de cuisson (12, 12'), au moins un réservoir d'eau (17, 17') avec un point de prélèvement (18), et au moins un bassin (19, 19') positionné sous le point de prélèvement (18) d'un réservoir d'eau (17, 17').

6. Unité de camping mobile selon la revendication 5, **caractérisée en ce que** l'espace utile peut être transféré d'un état de transport, dans lequel l'espace utile de l'unité de camping (1) est conçu essentiellement comme un parallélépipède fermé, vers un état d'utilisation, dans lequel la zone de cuisson (12, 12') est agencée à l'extérieur de l'espace utile.

7. Unité de camping mobile selon la revendication 6, **caractérisée en ce que** la zone de cuisson (12, 12') est conçue comme un tiroir (13) pour être transférée de l'état de transport vers l'état d'utilisation.
